# FASCICULE DE BREVET EUROPEEN

(11) **EP 1 807 330 B1**
(45) Date de publication et mention de la délivrance du brevet: **21.05.2008**
(21) Numéro de dépôt: 04767731.5
(22) Date de dépôt: 19.07.2004
(51) Int. Cl.: B65G 47/68

(54) **UNITE DE CONVOYAGE AVEC ACCUMULATION DE RECIPIENTS**
BEHÄLTERSTAUFÖRDEREINHEIT
CONTAINER-ACCUMULATING CONVEYING UNIT

(43) Date de publication de la demande: 18.07.2007
(73) Titulaire: SIDEL PARTICIPATIONS, 76930 Octeville-sur-Mer (FR)
(72) Inventeur: PETROVIC, Zmaj, F-76930 Octevill Sur Mer (FR)
(74) Mandataire: Nuss, Pierre
(86) Numéro de dépôt international: PCT/FR2004/001909
(87) Numéro de publication internationale: WO 2006/018486

(56) Documents cités:
- WO-A-00/41955
- US-A- 4 623 059

## Description

La présente invention concerne le domaine du convoyage de récipients, en particulier de bouteilles et a pour objet une unité de convoyage avec accumulation de récipients, notamment de bouteilles, comportant une table d'accumulation munie latéralement de rails de guidage et constituée par une juxtaposition d'au moins un convoyeur d'alimentation et un convoyeur d'accumulation. Les récipients sont amenés sur cette table, à son extrémité amont, notamment par l'intermédiaire d'au moins un transporteur d'alimentation et sont évacués à l'extrémité aval par l'intermédiaire d'un transporteur d'évacuation.

Dans une ligne de conditionnement de récipients d'un produit quelconque, lesdits récipients traversent différents postes de traitement. Ainsi, dans le cas particulier d'une unité d'embouteillage, il est usuel de faire passer les récipients, notamment s'ils sont en forme de bouteilles, dans une unité de lavage, sous une soutireuse, puis dans une étiqueteuse et, éventuellement, dans un conditionneur.

Entre ces différents postes de traitement, ces récipients sont déplacés au moyen de transporteurs prévus pour s'adapter aux cadences de production respectives desdits postes. A cet effet, il est nécessaire de constituer des stocks tampons de récipients au niveau de ces transporteurs intermédiaires. En outre, ces stocks tampons permettent souvent d'éviter l'arrêt complet d'une installation, par exemple d'une chaîne d'embouteillage lorsqu'un poste en aval est temporairement stoppé pour une intervention quelconque.

Pour la réalisation de tels stocks tampons, il est plus particulièrement prévu d'intercaler, au niveau des transporteurs intermédiaires, des tables d'accumulation, dont la capacité de stockage détermine, entre-autres, le temps dont dispose un opérateur pour assurer une intervention sur un poste en aval sans nécessiter un arrêt total de la chaîne de production. Il en résulte que la souplesse d'utilisation de l'installation de conditionnement est tributaire de la capacité d'accumulation des récipients entre deux unités de traitement successives, une grande capacité d'accumulation ayant pour conséquence une grande souplesse d'utilisation.

Le document WO-00/41955 décrit une table d'accumulation de ce type, qui est constitué par une juxtaposition de chaînes de transport, dont certaines définissent un convoyeur dit d'alimentation et d'autres, à vitesse de progression plus lente, forment des convoyeurs d'accumulation.

D'après ce document, les récipients sont alimentés sur la table d'accumulation à son extrémité amont par l'intermédiaire d'un transporteur d'alimentation qui est directement prolongé par un convoyeur d'alimentation. Lorsque les récipients arrivent dans la partie aval de la table et ne peuvent continuer à progresser normalement, ils sont automatiquement repoussés, sous l'influence des récipients suivants, vers le ou les convoyeurs d'accumulation s'étendant d'un côté ou de part et d'autre du convoyeur d'alimentation. Il en résulte une accumulation des récipients pour former un stock tampon.

Il est à noter qu'en période d'accumulation proprement dite le ou les convoyeurs d'accumulation sont à l'arrêt. Par contre, lorsque le flux s'écoule normalement sur le transporteur d'évacuation à l'extrémité aval de la table, les convoyeurs d'accumulation sont en mouvement et progressent plus lentement que les convoyeurs d'alimentation, comme déjà indiqué plus haut.

La différence de vitesse entre le ou les convoyeurs d'alimentation et le ou les convoyeurs d'accumulation entraîne la création de flux préférentiels le long de la table.

Il a été constaté que ces flux préférentiels, qui se créent quasi-systématiquement dans le prolongement d'un convoyeur d'alimentation sont la résultante d'une répartition incorrecte des récipients sur la table, plus particulièrement en phase d'accumulation. Ainsi, un récipient disposé sur un convoyeur d'alimentation et qui est au contact d'autres récipients, notamment de récipients répartis sur les convoyeurs d'accumulation, est soumis, sous l'influence de la progression du convoyeur d'alimentation, à une poussée dont la composante axiale, c'est-à-dire dans le sens normal de progression de ces récipients, est sensiblement supérieure à la composante transversale à la table et donc au sens de progression.

Il en résulte que ces récipients, disposés sur un convoyeur d'alimentation, repoussent très facilement et suivant une direction latérale les récipients qui sont disposés sur les convoyeurs d'accumulation et, du fait qu'ils progressent plus rapidement, ils empêchent l'intégration de ces récipients se trouvant sur les convoyeurs d'accumulation dans le flux préférentiel ainsi créé.

Il a été proposé de solutionner ces inconvénients en amenant les récipients stockés sur la table d'accumulation suivant une disposition en quinconce parfaite ou quasi-parfaite, c'est-à-dire de telle manière que ces récipients soient répartis en rangées s'étendant transversalement à la table et progressant, par conséquent, de front. En outre, les récipients, qui sont en contact les uns avec les autres sur une rangée, sont disposés en quinconce avec ceux des rangées précédente et suivante.

Ainsi, un récipient, qui n'est pas directement juxtaposé à un rail de guidage latéral, vient en contact de deux récipients de la rangée qui précède, mais également avec deux autres récipients de la rangée qui suit. Il s'ensuit un autre alignement des récipients dans une direction d'environ 30° par rapport à l'axe de la table, c'est-à-dire par rapport à la direction de progression des récipients. Un tel récipient subit donc des poussées suivant les angles de 30° précités par rapport à l'axe longitudinal de la table, de sorte qu'il a tendance à être repoussé latéralement et ne peut donc plus s'insérer dans un flux axial préférentiel. Comme une disposition parfaite en quinconce évite la présence de vide entre les récipients, les récipients disposés sur les convoyeurs d'accumulation ne peuvent, à leur tour être repoussés latéralement pour favoriser le passage des récipients en amont.

Il en résulte que les récipients disposés sur le ou les convoyeurs d'accumulation sont naturellement repoussés en aval de la table sans qu'un chemin préférentiel pour les récipients situés sur le ou les convoyeurs d'alimentation puisse s'instaurer.

Pour obvier à ces inconvénients, il a été proposé d'assurer une répartition parfaite ou quasi-parfaite en quinconce des récipients sur la table d'accumulation, simplement en prévoyant sur l'un et/ou l'autre côté de la table, sur les rails de guidage latéraux, une ou plusieurs chicanes d'amplitude déterminée. Une telle solution est notamment décrite dans le document US-A-4 623 059.

Par l'intermédiaire de ces chicanes d'amplitude définie, les récipients subissent une modification de leurs dispositions relatives les uns par rapport aux autres, sans pour autant produire un blocage, ce qui a précisément pour conséquence de leur permettre d'adopter une répartition dans les conditions précités avec suppression des vides entre ces récipients.

Il en résulte que les récipients progressent obligatoirement simultanément sur toute la largeur de la table d'accumulation, sans qu'il y ait une différentiation entre les récipients situés sur les convoyeurs d'alimentation et ceux disposés sur les convoyeurs d'accumulation.

Toutefois, ces chicanes en forme de dent de scie ont tendance à favoriser un blocage des récipients au fond des dents, ce qui entraîne une nécessaire adaptation desdites chicanes au diamètre des récipients. Par ailleurs, la prévision de telles chicanes rapportées entraîne une dépense relativement importante en main d'oeuvre et accessoires pour leur fixation et leur réglage en position, afm d'aboutir à une suite correcte de déviations des récipients individuellement et de les amener dans le flux principal suivant la disposition en quinconce prédéterminée. En outre, le fait même de rapporter de telles chicanes entraîne des risques supplémentaires d'incidents, tels que des déformations ou autres et donc la nécessité d'interventions de maintenance supplémentaires.

La présente invention a pour but de pallier ces inconvénients en proposant une unité de convoyage avec accumulation de récipients, notamment de bouteilles, permettant une déviation aisée des récipients situés près des bords vers le flux principal, avec mise en oeuvre de moyens simples et fiables.

A cet effet, l'unité de convoyage avec accumulation de récipients, notamment de bouteilles, comportant une table d'accumulation, munie latéralement de rails de guidage maintenant les récipients sur ladite table et constituée par une juxtaposition d'au moins un convoyeur d'alimentation et un convoyeur d'accumulation, les récipients étant amenés sur cette table, à son extrémité amont, notamment par l'intermédiaire d'au moins un transporteur d'alimentation et étant évacués à l'extrémité aval par l'intermédiaire d'au moins un transporteur d'évacuation, est caractérisée en ce que l'un au moins des rails de guidage est pourvu d'un décrochement transversal, constitué par un tronçon dudit rail de guidage, présentant une amplitude comprise entre 0,2 et 0,8 fois le diamètre D d'un récipient et décalé par rapport à l'axe longitudinal dudit rail de guidage d'une distance correspondant à ladite amplitude.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en plan d'une unité de convoyage avec accumulation conforme à l'invention, et

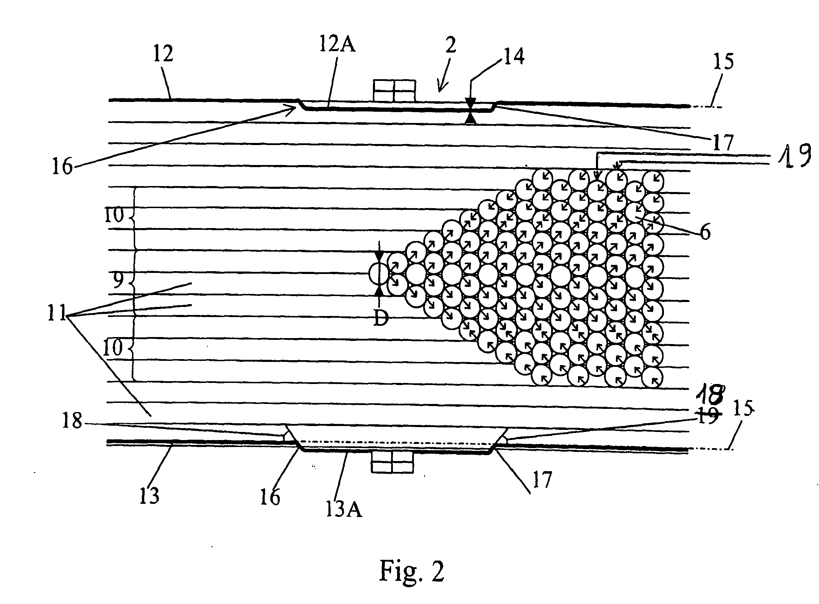

la figure 2 est une vue partielle en plan, à plus grande échelle, de la table d'accumulation représentant la mise en quinconce parfaite des récipients.

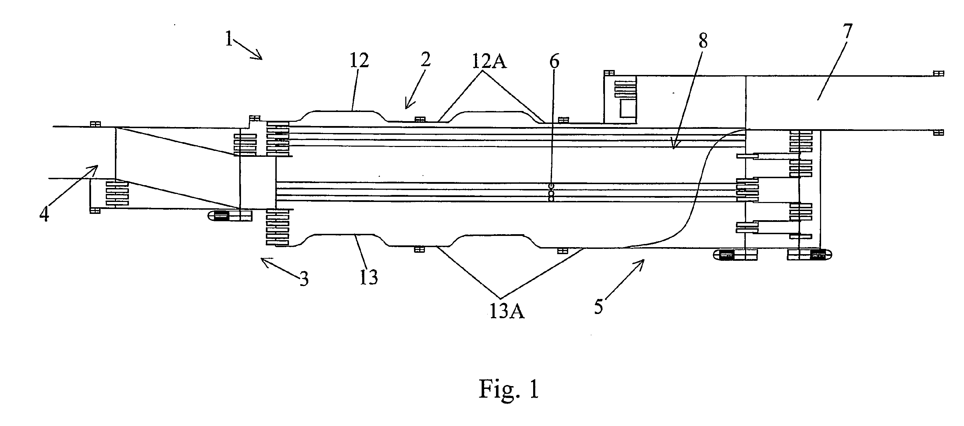

La figure 1 des dessins annexés représente une unité de convoyage avec accumulation de récipients 6, notamment de bouteilles, comportant une table d'accumulation 2, munie latéralement de rails de guidage 12, 13 maintenant les récipients 6 sur ladite table 2 et constituée par une juxtaposition d'au moins un convoyeur d'alimentation 9 et un convoyeur d'accumulation 10, les récipients 6 étant amenés sur cette table 2, à son extrémité amont 3, notamment par l'intermédiaire d'au moins un transporteur d'alimentation 4 et étant évacués à l'extrémité aval 5 par l'intermédiaire d'au moins un transporteur d'évacuation 7, éventuellement avec mise en oeuvre d'un convoyeur de transition 8. Le transporteur d'alimentation 4 débouche préférentiellement sur un convoyeur d'alimentation 9 qui progresse à une vitesse supérieure à celle d'un convoyeur d'accumulation 10.

A titre d'exemple, la table d'accumulation 2 peut être constituée par une juxtaposition de plusieurs chaînes à palettes 11, dont certaines forment un convoyeur d'alimentation 9 et d'autres forment un convoyeur d'accumulation 10, l'affectation de ces chaînes à palettes étant tributaire des vitesses d'avance distinctes, à savoir que celles dont la vitesse est la plus rapide sont destinées à former le convoyeur d'alimentation 9.

Il convient de remarquer qu'en période d'accumulation le ou les convoyeurs d'accumulation 10 sont mis à l'arrêt, de sorte que les récipients 6 en provenance d'un transporteur d'alimentation 4 et convoyés par le ou les convoyeurs d'alimentation 9 sont progressivement repoussés latéralement et stockés sur ce ou ces convoyeurs d'accumulation 10.

Il est à noter que l'invention n'est pas limitée à la configuration représentée. Ainsi, il est possible de prévoir plusieurs transporteurs d'alimentation 4 en partie amont 3 de la table 2, ainsi que plusieurs transporteurs d'évacuation 7 en partie aval 5.

Conformément à l'invention, l'un au moins des rails de guidage 12, 13 est pourvu d'un décrochement transversal 12a, 13a constitué par un tronçon dudit rail de guidage 12, 13, présentant une amplitude 14 comprise entre 0,2 et 0,8 fois le diamètre D d'un récipient 6 et décalé par rapport à l'axe longitudinal 15 dudit rail de guidage 12, 13 d'une distance correspondant à ladite amplitude 14.

De préférence, chaque rail de guidage 12, 13 comporte sur sa longueur plusieurs décrochements transversaux 12a, 13a répartis sur toute la longueur de la table d'accumulation 2. Ces décrochements transversaux 12a, 13a sont avantageusement équidistants les uns par rapport aux autres.

Selon une forme de réalisation de l'invention, les décrochements transversaux 12a, 13a des rails de guidage 12, 13 sont raccordés à cesdits rails de guidage 12, 13 par des zones de transition 16, 17 de faible inclinaison, destinées à assurer un transfert en douceur et à faible pression des récipients 6 à partir des bords de la table 2 vers la partie médiane de celle-ci et donc vers le convoyeur d'alimentation 9. De préférence, ces zones de transition 16, 17 présentent un angle d'inclinaison 18 par rapport à l'axe longitudinal 15 des rails de guidage 12, 13 inférieur à 45°.

Conformément à une autre forme de réalisation de l'invention, les décrochements transversaux 12a, 13a des rails de guidage 12, 13 sont alignés transversalement entre eux et présentent, par paires, une direction de décrochement transversal identique. Ainsi, à chaque décrochement 12a du rail 12, en direction de l'axe médian de la table 2, correspond un décrochement 13a du rail 13, en direction opposée par rapport à l'axe de la table 2, c'est-à-dire que ce décrochement 13a se situe vers l'extérieur par rapport à l'axe longitudinal 15 dudit rail 13.

Grâce à l'invention, il est possible de conférer aux récipients 6 en déplacement sur la table 2, sous la contrainte des décrochements transversaux 12a, 13a des rails de guidage 12, 13, une disposition en quinconce parfaite, par laquelle lesdits récipients 6 progressent dans la zone d'accumulation par rangées transversales 19 de récipients parfaitement alignés et jointifs, les récipients 6 d'une rangée étant disposés en quinconce par rapport à ceux de la rangée suivante ou précédente.

Il en résulte que la poussée exercée sur un tel récipient 6 se répercute nécessairement sur deux récipients 6 qui le précèdent, ce dans des directions d'environ 30° par rapport à l'axe longitudinal de la table d'accumulation 2. Les récipients précédents étant, par ailleurs, jointifs entre eux, ils ne peuvent s'effacer latéralement pour favoriser la création d'un flux préférentiel.

L'invention permet donc de remédier, de manière simple et efficace, au problème du convoyage de récipients et de leur alimentation dans un flux préférentiel, ce sans mise en oeuvre de moyens de guidage complémentaires rapportés.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, qui est défini par les revendications suivantes.

## Revendications

1. Unité de convoyage avec accumulation de récipients (6), notamment de bouteilles, comportant une table d'accumulation (2), munie latéralement de rails de guidage (12, 13) maintenant les récipients (6) sur ladite table (2) et constituée par une juxtaposition d'au moins un convoyeur d'alimentation (9) et un convoyeur d'accumulation (10), les récipients (6) étant amenés sur cette table (2), à son extrémité amont (3), notamment par l'intermédiaire d'au moins un transporteur d'alimentation (4) et étant évacués à l'extrémité aval (5) par l'intermédiaire d'au moins un transporteur d'évacuation (7), **caractérisée en ce que** l'un au moins des rails de guidage (12, 13) est pourvu d'un décrochement transversal (12a, 13a), constitué par un tronçon dudit rail de guidage (12, 13), présentant une amplitude (14) comprise entre 0,2 et 0,8 fois le diamètre (D) d'un récipient (6) et décalé par rapport à l'axe longitudinal (15) dudit rail de guidage (12, 13) d'une distance correspondant à ladite amplitude (14).

2. Unité de convoyage, suivant la revendication 1, **caractérisée en ce que** chaque rail de guidage (12, 13) comporte sur sa longueur plusieurs décrochements transversaux (12a, 13a) répartis sur toute la longueur de la table d'accumulation (2).

3. Unité de convoyage, suivant la revendication 2, **caractérisée en ce que** les décrochements transversaux (12a, 13a) sont équidistants les uns par rapport aux autres.

4. Unité de convoyage, suivant l'une quelconque des revendications 2 et 3, **caractérisée en ce que** les décrochements transversaux (12a, 13a) des rails de guidage (12, 13) sont raccordés à cesdits rails de guidage (12, 13) par des zones de transition (16, 17) de faible inclinaison destinées à assurer un transfert en douceur et à faible pression des récipients (6) à partir des bords de la table (2) vers la partie médiane de celle-ci et donc vers le convoyeur d'alimentation (9).

5. Unité de convoyage, suivant la revendication 4, **caractérisée en ce que** les zones de transition (16, 17) présentent un angle d'inclinaison (18) par rapport à l'axe longitudinal (15) des rails de guidage (12, 13) inférieur à 45°.

6. Unité de convoyage, suivant l'une quelconque des revendications 2 et 3, **caractérisée en ce que** les décrochements transversaux (12a, 13a) des rails de guidage (12, 13) sont alignés transversalement entre eux et présentent, par paires, une direction de décrochement transversal identique.

## Claims

1. Conveying unit with an accumulation of containers (6), especially bottles, comprising an accumulation table (2), provided laterally with guiding rails (12, 13) keeping the containers (6) on said table (2) and consisting of a juxtaposition of at least one feed conveyor (9) and an accumulation conveyor (10), the containers (6) being delivered onto this table (2), at its upstream end (3), in particular by means of at least one feed transporter (4) and being discharged at the downstream end (5) by means of at least one discharge transporter (7), **characterized in that** at least one of the guide rails (12, 13) is provided with a transverse discontinuity (12a, 13a), formed by a portion of said guide rail (12, 13), having a magnitude (14) of between 0.2 and 0.8 times the diameter (D) of a container (6) and offset with respect to the longitudinal axis (15) of said guide rail (12, 13) by a distance corresponding to said magnitude (14).

2. Conveying unit according to Claim 1, **characterized in that** each guide rail (12, 13) has several transverse discontinuities (12a, 13a) over its length, these being distributed over the entire length of the accumulation table (2).

3. Conveying unit according to Claim 2, **characterized in that** the transverse discontinuities (12a, 13a) are equidistant one with respect to another.

4. Conveying unit according to either of Claims 2 and 3, **characterized in that** the transverse discontinuities (12a, 13a) of the guide rails (12, 13) are joined to these said guide rails (12, 13) by slightly inclined transition zones (16, 17) intended to transfer, gently and with little pressure, containers (6) from the edges of the table (2) to the central part of the latter, and therefore towards the feed conveyor (9).

5. Conveying unit according to Claim 4, **characterized in that** the transition zones (16, 17) have an angle of inclination (18) to the longitudinal axis (15) of the guide rails (12, 13) of less than 45°.

6. Conveying unit according to any of Claims 2 and 3, **characterized in that** the transverse discontinuities (12a, 13a) of the guide rails (12, 13) are aligned transversely together and have, in pairs, an identical direction of transverse discontinuity.

## Patentansprüche

1. Beförderungseinheit mit Sammelstelle für Behälter (6), insbesondere Flaschen, die einen Sammeltisch (2) umfasst, der seitlich mit Führungsschienen (12, 13) ausgestattet ist, die die Behälter (6) auf dem Tisch (2) halten, und durch eine Aneinanderreihung von mindestens einer Zuführungsförderanlage (9) und einer Sammelförderanlage (10) gebildet ist, wobei die Behälter (6) an seinem vorgelagerten Ende (3) auf diesen Tisch (2) zugeführt werden, insbesondere mittels mindestens einem Zuführungstransportmittel (4), und an dem nachgelagerten Ende (5) mittels mindestens einem Abräumtransportmittel (7) abgeräumt werden,
**dadurch gekennzeichnet,**
**dass** mindestens eine der Führungsschienen (12, 13) mit einem Querversatzstück (12a, 13a) ausgestattet ist, das durch einen Abschnitt der Führungsschiene (12, 13) gebildet ist, wobei dieser ein Maß (14) zwischen 0,2 und 0,8 mal dem Durchmesser (D) eines Behälters (6) aufweist und bezüglich der Längsachse (15) der Führungsschiene (12, 13) um einen dem Maß (14) entsprechenden Abstand versetzt ist.

2. Beförderungseinheit gemäß Anspruch 1, **dadurch gekennzeichnet, dass** jede Führungsschiene (12, 13) auf ihrer Länge mehrere Querversatzstücke (12a, 13a) umfasst, die über die gesamte Länge des Sammeltisches (2) verteilt sind.

3. Beförderungseinheit gemäß Anspruch 2, **dadurch gekennzeichnet, dass** die Querversatzstücke (12a, 13a) zueinander mit gleichem Abstand angeordnet sind.

4. Beförderungseinheit gemäß einem der Ansprüche 2 und 3, **dadurch gekennzeichnet, dass** die Querversatzstücke (12a, 13a) der Führungsschienen (12, 13) mit den Führungsschienen (12, 13) über Übergangszonen (16, 17) mit leichter Schräge verbunden sind, die dazu bestimmt sind, einen Transfer sanft und bei leichtem Druck der Behälter (6) von den Rändern des Tisches (2) zu dem mittleren Teil desselben und somit in Richtung der Zuführungsförderanlage (9) sicherzustellen.

5. Beförderungseinheit gemäß Anspruch 4, **dadurch gekennzeichnet, dass** die Übergangszonen (16, 17) einen Winkelgrad (18) bezüglich der Längsachse (15) der Führungsschienen (12, 13) aufweisen, der geringer als 45° ist.

6. Beförderungseinheit gemäß einem der Ansprüche 2 und 3, **dadurch gekennzeichnet, dass** die Querversatzstücke (12a, 13a) der Führungsschienen (12, 13) paarweise miteinander in Querrichtung in einer übereinstimmenden Richtung des Querversatzstückes ausgerichtet sind.
